# EUROPEAN PATENT APPLICATION

(11) **EP 4 741 986 A1**
(43) Date of publication of application: **13.05.2026**
(21) Application number: 25210261.1
(22) Date of filing: 22.10.2025
(51) Int. Cl.: G05G 9/047, G05G 25/04

(54) **DIRECTION INPUT APPARATUS AND STICK DEVICE**

(30) Priority: 12.11.2024 JP 2024197357
(71) Applicant: Nintendo Co., Ltd., Kyoto 601-8501 (JP)
(72) Inventor: OKAMURA, Takanori, Kyoto, 601-8501 (JP); TAKEI, Masaya, Kyoto, 601-8501 (JP); JINGUJI, Gagaku, Kyoto, 601-8501 (JP); MINAGAWA, Shinta, Kyoto, 601-8501 (JP)
(74) Representative: Bardehle Pagenberg Partnerschaft mbB Patentanwälte Rechtsanwälte

(57) **Abstract**

A stick portion is tilted with respect to a stick module housing. The stick portion includes a user-operable portion located at least partially outside an outer edge of an upper surface of the stick module housing when viewed in a third direction. A housing includes a first hole through which a stick module passes, the first hole being larger than the user-operable portion in a second direction. A cover closes a part of the first hole. When viewed in a first direction, at least a part of the cover is located between an edge of the first hole and the stick module housing. The cover is immovable relatively to the stick module housing. When viewed in the third direction, an upper surface of the user-operable portion covers the entire stick portion.

## Description

### BACKGROUND OF THE INVENTION

### Field of the Invention

The present disclosure relates to a direction input apparatus and a stick device. Description of the Background Art

As disclosed in WO2023/203799, a configuration to suppress exposure of an internal structure of a controller housing by closing by a stick module housing, a hole at the controller housing through which a stick module passes has been known.

### SUMMARY OF THE INVENTION

A direction input apparatus according to the present disclosure includes a stick module including a stick module housing and a stick portion, a housing, and a cover. The stick portion extends in a first direction from an opening at the stick module housing and is configured to be tilted with respect to the stick module housing. The stick portion includes a user-operable portion, the user-operable portion being located at an end in the first direction of the stick portion, the user-operable portion extending from the stick portion in a second direction perpendicular to the first direction, the user-operable portion being located at least partially outside an outer edge of an upper surface of the stick module housing when viewed in a third direction which is opposite to the first direction. The housing includes a first hole through which the stick module passes, the first hole being larger than the user-operable portion in the second direction. The cover is configured to close a part of the first hole, at least a part of the cover being located between an edge of the first hole and the stick module housing when viewed in the first direction. The cover is immovable relatively to the stick module housing. When viewed in the third direction, an upper surface of the user-operable portion covers the entire stick portion.

In the direction input apparatus according to the above, the cover may include a first surface including an area flush with a front surface of the housing.

In the direction input apparatus according to the above, at least a part of the cover may project from the first hole.

In the direction input apparatus according to the above, the first surface may be curved, the first surface being located more in the first direction as it is closer to a center of the first hole.

In the direction input apparatus according to the above, the cover may include a second surface extending from an outer edge of the first surface in the third direction and a third surface extending from the second surface in the second direction. The second surface may be opposed to an inner circumferential surface of the first hole. The third surface may be opposed to an inner surface of the housing that is an opposite side of the front surface of the housing.

In the direction input apparatus according to the above, the cover may include a second hole that opens at the third surface. A protrusion that projects from the inner surface of the housing may pass through the second hole.

In the direction input apparatus according to the above, the cover may include a step portion. The first hole may be located at a front wall of the housing. The step portion may be configured to be matched with a corner formed by an inner circumferential surface of the first hole at the front wall and an inner surface of the housing.

In the direction input apparatus according to the above, the stick portion may include a deformable umbrella portion extending in the third direction and the second direction. The cover may overlap with an outer edge of the umbrella portion when viewed in the first direction.

In the direction input apparatus according to the above, the outer edge of the umbrella portion may be located outside the housing.

The direction input apparatus according to the above may include a substrate. The stick module housing may be located to pass through a notch or a hole provided at the substrate. At least a part of a surface opposite to an externally exposed surface of the cover may be opposed to a surface at a side of the first direction of the substrate.

In the direction input apparatus according to the above, the cover may be fixed to the stick module housing.

A stick device according to the present disclosure includes a stick module housing, a stick portion, and a cover. The stick portion extends in a first direction from an opening at the stick module housing and is configured to be tilted with respect to the stick module housing. The stick portion includes a user-operable portion, the user-operable portion being located at an end in the first direction of the stick portion, the user-operable portion extending from the stick portion in a second direction perpendicular to the first direction, the user-operable portion being located at least partially outside an outer edge of an upper surface of the stick module housing when viewed in a third direction which is opposite to the first direction. The cover is fixed to the stick module housing, the cover being located between the stick module housing and the user-operable portion in the first direction. When viewed in the third direction, an upper surface of the user-operable portion covers the entire stick portion. When viewed in the first direction, an outer edge of the cover surrounds the user-operable portion.

In the stick device according to the above, the stick portion may include a deformable umbrella portion extending in the third direction and the second direction. The cover may overlap with an outer edge of the umbrella portion when viewed in the first direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows an exemplary illustrative non-limiting drawing of a schematic perspective view showing a configuration of a direction input apparatus.
Fig. 2 shows an exemplary illustrative non-limiting drawing of a schematic perspective view showing a configuration of a stick device.
Fig. 3 shows an exemplary illustrative non-limiting drawing of a partial schematic cross-sectional view along the line III-III in Fig. 1.
Fig. 4 shows an exemplary illustrative non-limiting drawing of a schematic cross-sectional view showing a configuration of a stick.
Fig. 5 shows an exemplary illustrative non-limiting drawing of a schematic plan view showing the configuration of the stick.
Fig. 6 shows an exemplary illustrative non-limiting drawing of a schematic perspective view showing a configuration of a cover.
Fig. 7 shows an exemplary illustrative non-limiting drawing of a schematic rear view showing a state in which the cover has been attached to a front wall of a controller housing.
Fig. 8 shows an exemplary illustrative non-limiting drawing of a schematic perspective view showing a state in which the cover has been attached to a stick module housing.
Fig. 9 shows an exemplary illustrative non-limiting drawing of a schematic rear view showing a state in which the stick module housing has been attached to the front wall of the controller housing.

### DETAILED DESCRIPTION OF NON-LIMITING EXAMPLE EMBODIMENTS

An embodiment of the present disclosure (which is also referred to as the present embodiment) will be described in detail with reference to the drawings. The same or corresponding elements in the drawings have the same reference characters allotted and description thereof will not be repeated.

### (Direction Input Apparatus)

A configuration of a direction input apparatus according to the present embodiment will initially be described.

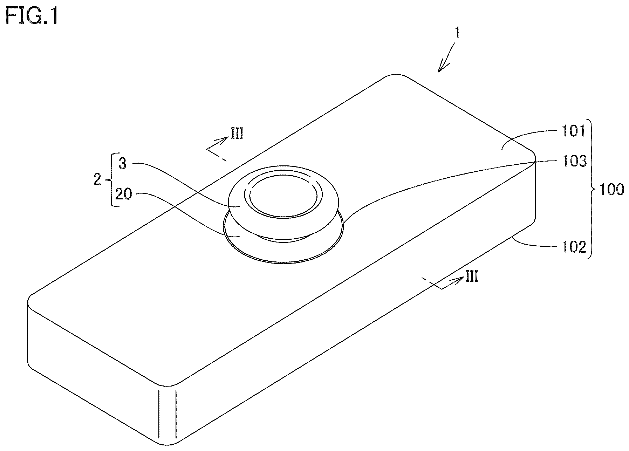

Fig. 1 is a schematic perspective view showing the configuration of the direction input apparatus. As shown in Fig. 1, a direction input apparatus 1 according to the present embodiment includes, for example, a controller housing 100 and a stick device 2. Controller housing 100 includes a first hole 103. First hole 103 is provided at a front surface 101 of controller housing 100. Stick device 2 is arranged in first hole 103.

### (Stick Device)

A configuration of the stick device according to the present embodiment will now be described.

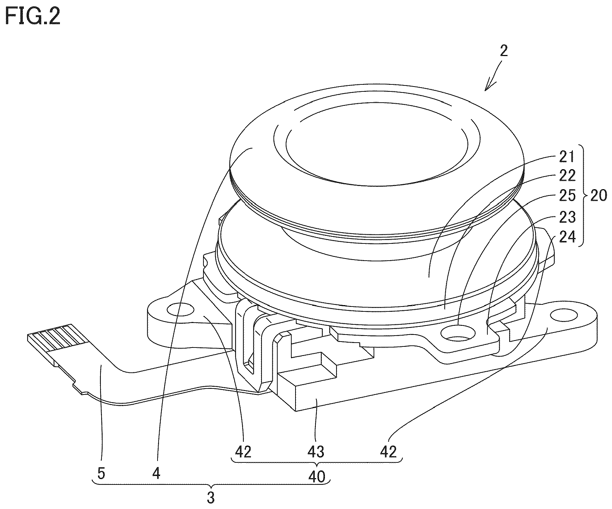

Fig. 2 is a schematic perspective view showing the configuration of stick device 2. As shown in Fig. 2, stick device 2 according to the present embodiment includes a stick module 3 and a cover 20. Stick module 3 includes a stick module housing 40, a stick 4, and a drawn terminal member 5.

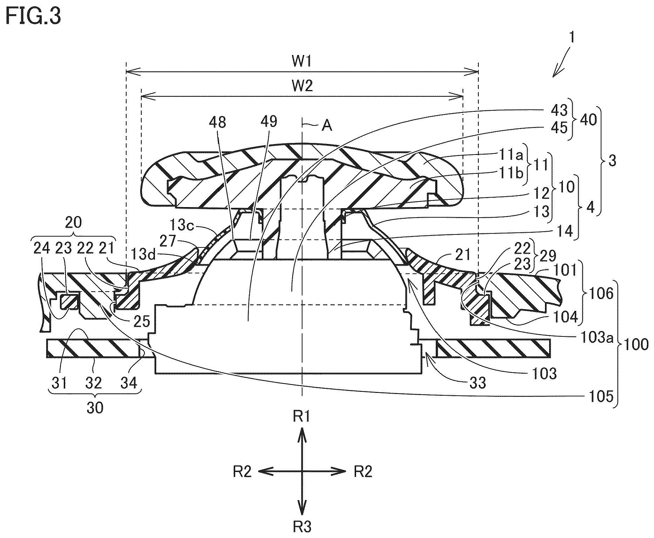

Fig. 3 is a partial schematic cross-sectional view along the line III-III in Fig. 1. As shown in Fig. 3, stick module 3 passes through first hole 103. Stick module 3 includes, for example, stick module housing 40 and stick 4. Stick 4 includes a first stick portion 10 and a second stick portion 14. At an upper surface of stick module housing 40, an opening 49 is provided. Stick 4 is arranged to pass through opening 49. First stick portion 10 is a portion that is out of opening 49. First stick portion 10 is located outside stick module housing 40. Second stick portion 14 is a portion that is not out of opening 49. Second stick portion 14 is located inside stick module housing 40. Second stick portion 14 is contiguous to first stick portion 10.

A direction in which first stick portion 10 extends from opening 49 at stick module housing 40 is herein defined as a first direction R1. First direction R1 is also referred to as a front side or forward. A second direction R2 is perpendicular to first direction R1. Second direction R2 extends radially from an axial line A of first stick portion 10. Second direction R2 is also referred to as a radial direction or upward-downward and left-right directions. A third direction R3 is a direction opposite to first direction R1. Third direction R3 is also referred to as a rear side or rearward.

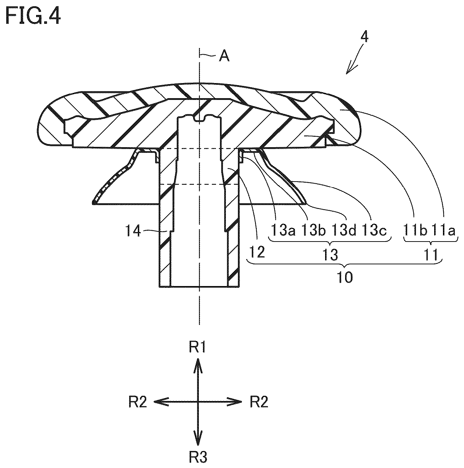

Fig. 4 is a schematic cross-sectional view showing a configuration of stick 4. As shown in Fig. 4, first stick portion 10 which is a part of stick 4 includes, for example, a user-operable portion 11, a shaft portion 12, and an umbrella portion 13. User-operable portion 11 is located at an end in first direction R1 of first stick portion 10. User-operable portion 11 extends from axial line A of first stick portion 10 in second direction R2. User-operable portion 11 is substantially in a disc shape. User-operable portion 11 includes, for example, a first user-operable member 11a and a second user-operable member 11b. First user-operable member 11a is a portion to be touched by a user. First user-operable member 11a covers second user-operable member 11b. Though a method of forming first user-operable member 11a to cover second user-operable member 11b is not limited, for example, double molding may be adopted.

Though user-operable portion 11 is formed from first user-operable member 11a and second user-operable member 11b in the present embodiment, it may be formed from a single component.

Shaft portion 12 of first stick portion 10 is contiguous to second user-operable member 11b. Shaft portion 12 extends along first direction R1. Shaft portion 12 is contiguous to second stick portion 14. Though second user-operable member 11b, shaft portion 12, and second stick portion 14 are formed from a single component in the present embodiment, they may be formed from a plurality of components. Shaft portion 12 is, for example, in a hollow cylindrical shape. User-operable portion 11 is located in first direction R1 with respect to shaft portion 12. Second stick portion 14 is located in third direction R3 with respect to shaft portion 12. Second stick portion 14 is, for example, in a hollow cylindrical shape. In first direction R1, a length of second stick portion 14 may be longer than a length of shaft portion 12.

As shown in Figs. 3 and 4, axial line A of first stick portion 10 extends along first direction R1. First stick portion 10 and second stick portion 14 are configured to be tilted with respect to stick module housing 40. Specifically, first stick portion 10 and second stick portion 14 are tilted such that axial line A of first stick portion 10 is inclined with respect to first direction R1. In second direction R2, first hole 103 is larger than user-operable portion 11. In second direction R2, a diameter (first diameter W1) of first hole 103 is larger than a diameter (second diameter W2) of user-operable portion 11.

Umbrella portion 13 is formed, for example, from an elastic member. Umbrella portion 13 is deformable. As shown in Fig. 4, umbrella portion 13 includes a first umbrella area 13a, a second umbrella area 13b, a third umbrella area 13c, and an umbrella portion outer edge 13d. First umbrella area 13a extends in a direction in parallel to axial line A. First umbrella area 13a is in a hollow cylindrical shape. First umbrella area 13a is in contact with shaft portion 12. Second umbrella area 13b is contiguous to first umbrella area 13a. Second umbrella area 13b extends in second direction R2. In second direction R2, second umbrella area 13b is located outside first umbrella area 13a. Second umbrella area 13b is in contact with second user-operable member 11b.

Third umbrella area 13c is contiguous to second umbrella area 13b. Third umbrella area 13c extends in third direction R3 and second direction R2. An inner diameter of third umbrella area 13c in second direction R2 increases toward third direction R3. In second direction R2, third umbrella area 13c is located outside second umbrella area 13b. In second direction R2, umbrella portion outer edge 13d is located at an outermost side of umbrella portion 13.

Though umbrella portion 13 is a component separate from shaft portion 12 in the present embodiment, it may be formed integrally with shaft portion 12, user-operable portion 11, or the like.

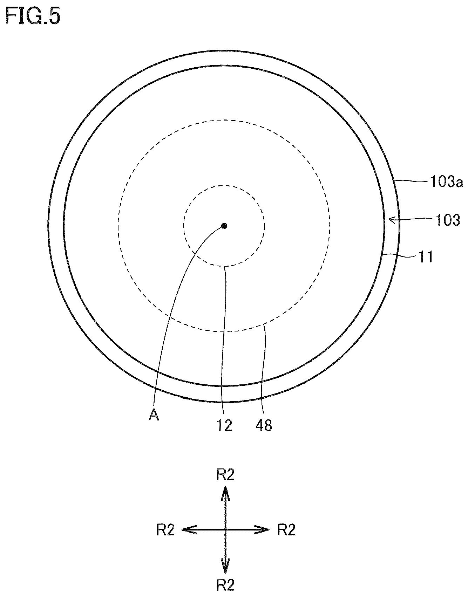

Fig. 5 is a schematic plan view showing the configuration of stick 4. As shown in Fig. 5, when viewed in third direction R3, an upper surface of user-operable portion 11 is, for example, circular. When viewed in third direction R3, user-operable portion 11 is located at least partially outside an outer edge 48 of an upper surface of stick module housing 40. An outer edge of user-operable portion 11 surrounds outer edge 48 of the upper surface of stick module housing 40. When viewed in third direction R3, the upper surface of user-operable portion 11 covers the entire first stick portion 10. When viewed in third direction R3, the entire first stick portion 10 is surrounded by the outer edge of user-operable portion 11. When viewed in third direction R3, first stick portion 10 does not include a portion located radially outside the outer edge of user-operable portion 11. When viewed in third direction R3, a part of first hole 103 is exposed between the outer edge of user-operable portion 11 and an edge 103a of first hole 103. Therefore, an internal structure (not shown) such as a substrate is exposed through a gap between the outer edge of user-operable portion 11 and edge 103a of first hole 103.

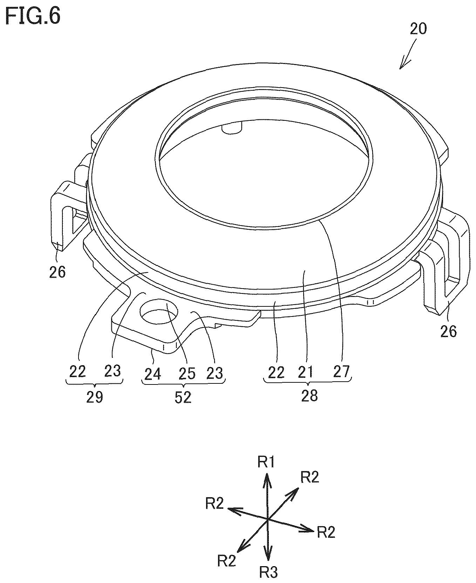

Fig. 6 is a schematic perspective view showing a configuration of cover 20. Cover 20 includes, for example, a main body portion 28, a first fixed portion 26, and a positioning portion 52. Main body portion 28 includes a first surface 21 and a second surface 22. First surface 21 extends in third direction R3 and second direction R2. Second surface 22 extends in third direction R3. A cover opening 27 is located at first surface 21. Each of first surface 21 and second surface 22 is annular. Positioning portion 52 is located at an outer circumferential side of main body portion 28. Positioning portion 52 includes a third surface 23 and a fourth surface 24. Fourth surface 24 is located opposite to third surface 23. Each of third surface 23 and fourth surface 24 extends in second direction R2. A second hole 25 is provided at positioning portion 52. Second hole 25 opens at each of third surface 23 and fourth surface 24. Cover 20 includes a step portion 29. Step portion 29 is formed, for example, from second surface 22 and third surface 23. First fixed portion 26 is provided at the outer circumferential side of main body portion 28. Though the number of first fixed portion 26 is not particularly limited, for example, there are two first fixed portions 26. First fixed portions 26 are located at respective opposing sides of main body portion 28.

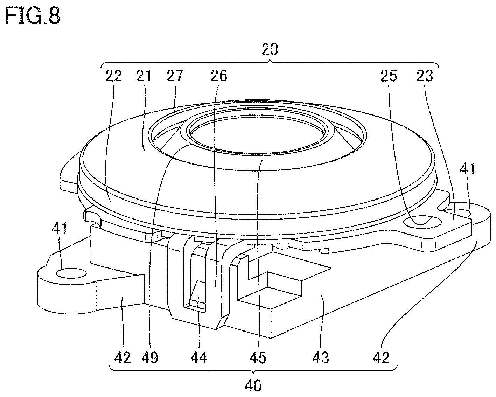

First fixed portion 26 is, for example, an engagement portion in a form of a hook. As shown in Fig. 8, a protruding portion 44 is located at an outer circumferential side of a base portion 43 of stick module housing 40. First fixed portion 26 is attached to protruding portion 44. First fixed portion 26 is engaged with protruding portion 44. Means for fixing first fixed portion 26 is not limited to engagement. First fixed portion 26 may be, for example, a hole or a protrusion configured to be matched with a hole, or may be such a structure that a plurality of first fixed portions 26 clamp a target. Alternatively, first fixed portion 26 may be fixed, for example, by bonding.

As shown in Fig. 3, first surface 21 includes an area flush with surface 101 of controller housing 100. At first surface 21, an area close to second surface 22 is flush with surface 101 of controller housing 100. Surface 101 of controller housing 100 and a surface of cover 20 are flush with each other. First surface 21 is curved, first surface 21 being located more in first direction R1 as it is closer to the center of first hole 103. Axial line A extends in a direction of passage through first hole 103. At least a part of cover 20 projects from first hole 103. First surface 21 includes an area located at the front side of surface 101 of controller housing 100.

Second surface 22 extends from an outer edge of first surface 21 in third direction R3. Second surface 22 is opposed to an inner circumferential surface (a first inner circumferential surface 103a) of first hole 103. Second surface 22 may be in contact with first inner circumferential surface 103a. Third surface 23 extends from second surface 22 in second direction R2. Third surface 23 is opposed to an inner surface (a first inner surface 104) of controller housing 100. Third surface 23 may be in contact with first inner surface 104. First inner surface 104 is located opposite to surface 101 of controller housing 100.

First hole 103 is located at a front wall 106 of controller housing 100. Step portion 29 is configured to be matched with a corner formed by first inner circumferential surface 103a of first hole 103 at front wall 106 and first inner surface 104. An angle of the corner is approximately 90°. The corner may be curved. The corner may be at an angle other than 90°. Front wall 106 of controller housing 100 includes a protrusion 105 that projects from first inner surface 104. Protrusion 105 passes through second hole 25 of cover 20.

As shown in Fig. 3, third umbrella area 13c has entered cover opening 27. Third umbrella area 13c surrounds an end at a side of first direction R1 of an outer circumferential surface of stick module housing 40. Umbrella portion outer edge 13d is located outside controller housing 100. In first direction R1, umbrella portion outer edge 13d is located in first direction R1, relative to surface 101 of controller housing 100.

If umbrella portion outer edge 13d extends to the inside of controller housing 100, umbrella portion 13 and stick module housing 40 may interfere with each other when umbrella portion 13 is tilted. In order to prevent this interference, stick module housing 40 should be located further toward the back. In this case, controller housing 100 increases in thickness. According to direction input apparatus 1 according to the present embodiment, umbrella portion outer edge 13d is arranged outside controller housing 100 and a part of cover 20 projects outside first hole 103. A part of cover 20 thus covers at least a clearance in R2 direction between umbrella portion 13 and first hole 103. According to the configuration, increase in size of direction input apparatus 1 can be suppressed.

As shown in Fig. 3, a substrate 30 includes a first substrate surface 31, a second substrate surface 32, and a second inner circumferential surface 34. First substrate surface 31 is a surface at the side of first direction R1 of substrate 30. Second substrate surface 32 is located opposite to first substrate surface 31. Second inner circumferential surface 34 is contiguous to each of first substrate surface 31 and second substrate surface 32. First inner surface 104 of controller housing 100 is opposed to first substrate surface 31. An upper surface of protrusion 105 is opposed to first substrate surface 31. At least a part of a surface opposite to an externally exposed surface of cover 20 is opposed to first substrate surface 31. Specifically, fourth surface 24 of cover 20 is opposed to first substrate surface 31.

Substrate 30 is provided with a hole (third hole 33). Stick module housing 40 is located to pass through third hole 33. Substrate 30 may be provided with a notch. Stick module housing 40 may be located to pass through the notch.

Stick module housing 40 may include base portion 43 and a dome portion 45. Dome portion 45 is contiguous to base portion 43. Dome portion 45 is located in first direction R1 with respect to base portion 43. A part of base portion 43 is surrounded by second inner circumferential surface 34. Opening 49 of stick module housing 40 is located at dome portion 45. In first direction R1, opening 49 of stick module housing 40 is located between cover opening 27 and user-operable portion 11.

According to direction input apparatus 1 according to the present embodiment, stick module housing 40 is located to pass through the notch or the hole provided at substrate 30. A space in a height direction of direction input apparatus 1 can thus be reduced. Substrate 30 extends long such that fourth surface 24 of cover 20 is opposed to first substrate surface 31.

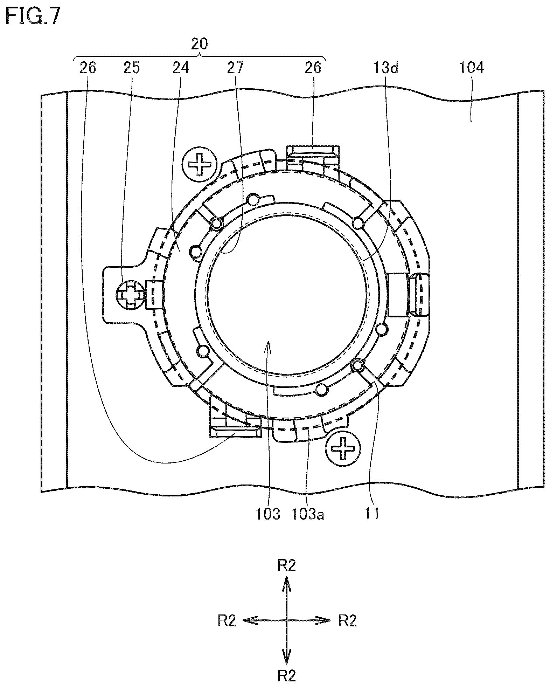

Fig. 7 is a schematic rear view showing a state in which cover 20 has been attached to front wall 106 of controller housing 100. Fig. 7 shows a state in which front wall 106 of controller housing 100 and cover 20 are viewed in first direction R1. Cover 20 closes a part of first hole 103. When viewed in first direction R1, cover opening 27 is located inside first hole 103. As shown in Fig. 3, in first direction R1, at least a part of cover 20 may be located in an area surrounded by first inner circumferential surface 103a of first hole 103, located in first direction R1 relative to first hole 103, or located in third direction R3 relative to first hole 103.

As shown in Fig. 7, when viewed in first direction R1, a part of cover 20 is located outside edge 103a of first hole 103. When viewed in first direction R1, cover opening 27 is surrounded by edge 103a of first hole 103. When viewed in first direction R1, cover 20 overlaps with umbrella portion outer edge 13d. When viewed in first direction R1, umbrella portion outer edge 13d surrounds cover opening 27.

According to direction input apparatus 1 according to the present embodiment, controller housing 100 is provided with first hole 103 through which stick module 3 passes. At least a part of cover 20 is located between edge 103a of first hole 103 and stick module housing 40. Exposure of a structure inside controller housing 100 can thus be suppressed. In addition, degradation of design quality can be suppressed.

According to direction input apparatus 1 according to the present embodiment, cover 20 may include first surface 21 including the area flush with surface 101 of controller housing 100. Entry of a foreign matter through first hole 103 can thus be suppressed better, for example, than in an example where first surface 21 has entered inside. In addition, feel when the user operates a controller is pleasant.

According to direction input apparatus 1 according to the present embodiment, at least a part of cover 20 may project from first hole 103. Entry of a foreign matter through first hole 103 can thus be suppressed.

According to direction input apparatus 1 according to the present embodiment, first surface 21 may be curved, first surface 21 being located more in first direction R1 as it is closer to the center of first hole 103. Entry of a foreign matter through first hole 103 can thus be suppressed.

According to direction input apparatus 1 according to the present embodiment, cover 20 may include second surface 22 extending from the outer edge of first surface 21 in third direction R3 and third surface 23 extending from second surface 22 in second direction R2. Second surface 22 may be opposed to the inner circumferential surface of first hole 103. Third surface 23 may be opposed to the inner surface of controller housing 100 that is the opposite side of surface 101 of controller housing 100. While step portion 29 formed by second surface 22 and third surface 23 improves accuracy in alignment in a front-rear direction and the upward-downward and left-right directions, exposure of the internal structure can effectively be suppressed.

According to direction input apparatus 1 according to the present embodiment, cover 20 may include second hole 25 that opens at third surface 23. Protrusion 105 that projects from the inner surface of controller housing 100 may pass through second hole 25. Second hole 25 improves accuracy in alignment in the upward-downward and left-right directions.

According to direction input apparatus 1 according to the present embodiment, cover 20 may include step portion 29. First hole 103 may be located at front wall 106 of controller housing 100. Step portion 29 may be configured to be matched with the corner formed by the inner circumferential surface of first hole 103 at front wall 106 and the inner surface of controller housing 100. While step portion 29 improves accuracy in alignment in the front-rear direction and the upward-downward and left-right directions, exposure of the internal structure can effectively be suppressed.

Fig. 8 is a schematic perspective view showing a state in which cover 20 has been attached to stick module housing 40. As shown in Fig. 8, two second fixed portions 42 are located at the outer circumferential side of base portion 43 of stick module housing 40. Each of two second fixed portions 42 is provided with a through hole 41. First fixed portion 26 of cover 20 is attached to protruding portion 44 located at the outer circumferential side of base portion 43. First fixed portion 26 is engaged with protruding portion 44. Cover 20 is thus fixed to stick module housing 40. Cover 20 is immovable relatively to stick module housing 40. Therefore, since stick module 3 and cover 20 can be handled as one integrated part, they can readily be assembled, for example, to another component such as controller housing 100.

Stick module housing 40 includes dome portion 45. Dome portion 45 is located above base portion 43. Dome portion 45 is surrounded by each of first surface 21 and second surface 22 of cover 20. Dome portion 45 is arranged at cover opening 27. As shown in Fig. 3, in first direction R1, cover 20 is located between base portion 43 of stick module housing 40 and user-operable portion 11. In first direction R1, the upper surface of stick module housing 40 is located in first direction R1 relative to cover 20.

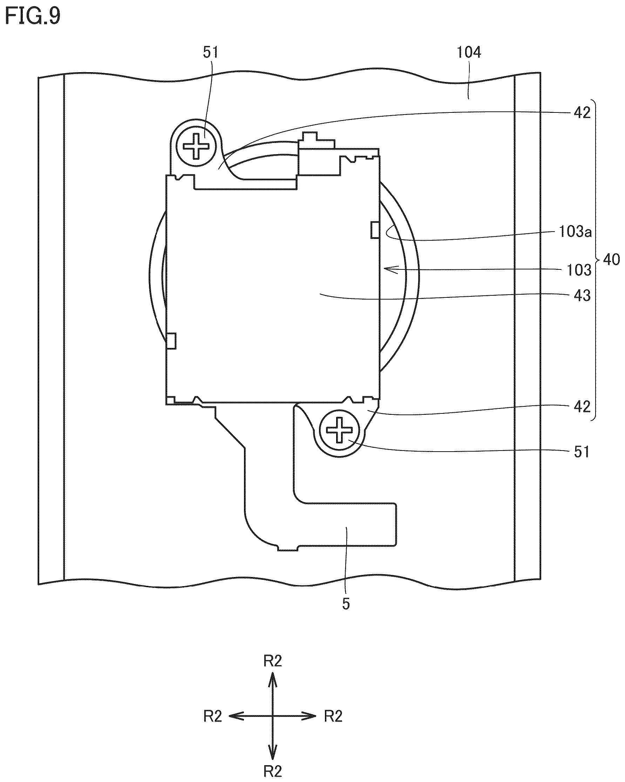

Fig. 9 is a schematic rear view showing a state in which stick module housing 40 has been attached to front wall 106 of controller housing 100. In Fig. 9, cover 20 has been removed. Fig. 9 shows a state in which controller housing 100 and stick module housing 40 are viewed in first direction R1. When viewed in first direction R1, a part of stick module housing 40 overlaps with first hole 103. When viewed in first direction R1, in second direction R2, other portions of stick module housing 40 are located outside first inner circumferential surface 103a of first hole 103.

As shown in Fig. 9, when viewed in first direction R1, there is a clearance between edge 103a of first hole 103 and an outer circumference of stick module housing 40. The internal structure such as substrate 30 may be exposed through this clearance. As shown in Fig. 7, as a part of cover 20 is located in this clearance portion in second direction R2, exposure of the internal structure is suppressed.

As shown in Fig. 9, stick module 3 includes drawn terminal member 5. Drawn terminal member 5 is drawn from stick module housing 40. Drawn terminal member 5 is electrically connected to substrate 30.

Stick module housing 40 is attached to controller housing 100 with a fastening screw 51. Specifically, fastening screw 51 is inserted in through hole 41 located at second fixed portion 42 of stick module housing 40 and fixed to front wall 106 of controller housing 100.

### (Assembly Method)

An exemplary method of assembling stick device 2 to controller housing 100 will now be described.

Initially, shaft portion 12 of stick 4 is inserted from the rear of stick 4 toward cover 20. In this state, cover 20 and stick 4 are yet to be fixed. Then, while the opening of umbrella portion 13 is wide open, umbrella portion 13 is inserted from the rear of stick 4. An outer circumferential edge of umbrella portion 13 is thus covered with cover 20. Stick 4 is then inserted in opening 49 of stick module housing 40. Cover 20 is engaged with stick module housing 40 (see Fig. 8). Stick device 2 is thus formed.

Then, while cover 20 and controller housing 100 are positioned, stick device 2 is inserted in first hole 103 of controller housing 100. Stick device 2 is fastened to front wall 106 of controller housing 100 with fastening screw 51 (see Fig. 7). Stick module housing 40 is inserted in third hole 33 located at substrate 30 to assemble substrate 30 to controller housing 100 (see Fig. 3). Stick device 2 is assembled to controller housing 100 as set forth above. A direction of assembly above is by way of example and another method may be employed.

### <Modification>

Cover 20 may be comprised of a single component, or may be divided into two or more components. In an example where cover 20 is comprised of two or more components, after stick module housing 40 other than cover 20 is assembled to controller housing 100, components of cover 20 resulting from division into two parts may be assembled to controller housing 100 or stick module housing 40.

Though direction input apparatus 1 is, for example, a game controller, it is not limited to the game controller. Direction input apparatus 1 may be, for example, a portable game machine. In this case, controller housing 100 includes a housing of the portable game machine as a whole. Direction input apparatus 1 may be an apparatus other than the portable game machine.

First surface 21 of cover 20 does not have to be flush with surface 101 of controller housing 100.

At least a part of cover 20 does not have to project from first hole 103 in first direction R1.

First surface 21 of cover 20 does not have to be curved as being located more in first direction R1 as it is closer to the center of first hole 103.

Cover 20 does not have to include second hole 25 through which protrusion 105 that projects from the inner surface of controller housing 100 passes.

Stick 4 portion does not have to include umbrella portion 13. Stick 4 portion may be comprised of user-operable portion 11 and shaft portion 12.

The outer edge of umbrella portion 13 may be located inside controller housing 100.

Stick module housing 40 may be located not to pass through the notch or the hole located at substrate 30. Stick module housing 40 may be arranged, for example, between first substrate surface 31 of substrate 30 and front wall 106 of controller housing 100.

Cover 20 does not have to be fixed to stick module housing 40. Cover 20 may be fixed, for example, to controller housing 100.

Although the present invention has been described and illustrated in detail, it is clearly understood that the same is by way of illustration and example only and is not to be taken by way of limitation, the scope of the present invention being interpreted by the terms of the appended claims.

## Claims

1. A direction input apparatus (1) comprising:
a stick module (3) comprising
a stick module housing (40), and
a stick portion (10), the stick portion extending in a first direction from an opening at the stick module housing, the stick portion being configured to be tilted with respect to the stick module housing, the stick portion comprising a user-operable portion (11), the user-operable portion being located at an end in the first direction of the stick portion, the user-operable portion extending from the stick portion in a second direction perpendicular to the first direction, the user-operable portion being located at least partially outside an outer edge of an upper surface of the stick module housing when viewed in a third direction which is opposite to the first direction;
a housing (100) comprising a first hole (103) through which the stick module passes, the first hole being larger than the user-operable portion in the second direction; and
a cover (20) configured to close a part of the first hole, at least a part of the cover being located between an edge of the first hole and the stick module housing when viewed in the third direction, the cover being immovable relatively to the stick module housing, wherein
when viewed in the third direction, an upper surface of the user-operable portion covers the entire stick portion.

2. The direction input apparatus according to claim 1, wherein
the cover comprises a first surface (21) comprising an area flush with a front surface of the housing.

3. The direction input apparatus according to claim 2, wherein
at least a part of the cover projects from the first hole.

4. The direction input apparatus according to claim 3, wherein
the first surface is curved, the first surface being located more in the first direction as it is closer to a center of the first hole.

5. The direction input apparatus according to claim 2, wherein
the cover comprises
a second surface (22) extending from an outer edge of the first surface in the third direction, and
a third surface (23) extending from the second surface in the second direction,
the second surface is opposed to an inner circumferential surface of the first hole, and
the third surface is opposed to an inner surface of the housing that is an opposite side of the front surface of the housing.

6. The direction input apparatus according to claim 5, wherein
the cover comprises a second hole (25) that opens at the third surface, and a protrusion (105) that projects from the inner surface of the housing passes through the second hole.

7. The direction input apparatus according to any of claims 1 to 6, wherein
the cover comprises a step portion (29),
the first hole is located at a front wall of the housing, and
the step portion is configured to be matched with a corner formed by an inner circumferential surface of the first hole at the front wall and an inner surface of the housing.

8. The direction input apparatus according to claim 1, wherein
the stick portion comprises a deformable umbrella portion (13) extending in the third direction and the second direction, and
the cover overlaps with an outer edge of the umbrella portion when viewed in the first direction.

9. The direction input apparatus according to claim 8, wherein
the outer edge of the umbrella portion is located outside the housing.

10. The direction input apparatus according to any of claims 1 to 9, comprising a substrate (30), wherein
the stick module housing is located to pass through a notch or a hole provided at the substrate, and
at least a part of a surface opposite to an externally exposed surface of the cover is opposed to a surface at a side of the first direction of the substrate.

11. The direction input apparatus according to any of claims 1 to 10, wherein the cover is fixed to the stick module housing.

12. A stick device (2) comprising:
a stick module housing (40);
a stick portion (10), the stick portion extending in a first direction from an opening at the stick module housing, the stick portion being configured to be tilted with respect to the stick module housing, the stick portion comprising a user-operable portion (11), the user-operable portion being located at an end in the first direction of the stick portion, the user-operable portion extending from the stick portion in a second direction perpendicular to the first direction, the user-operable portion being located at least partially outside an outer edge of an upper surface of the stick module housing when viewed in a third direction which is opposite to the first direction; and
a cover (20) fixed to the stick module housing, the cover being located between the stick module housing and the user-operable portion in the first direction, wherein
when viewed in the third direction, an upper surface of the user-operable portion covers the entire stick portion, and
when viewed in the first direction, an outer edge of the cover surrounds the user-operable portion.

13. The stick device according to claim 12, wherein
the stick portion comprises a deformable umbrella portion (13) extending in the third direction and the second direction, and
the cover overlaps with an outer edge of the umbrella portion when viewed in the first direction.
